(19) Europäisches Patentamt
European Patent Office
Office européen des brevets

(11) Numéro de publication: **0 016 675**
**B1**

(12) **FASCICULE DE BREVET EUROPEEN**

(45) Date de publication du fascicule de brevet: **14.10.81**

(21) Numéro de dépôt: **80400269.9**

(22) Date de dépôt: **27.02.80**

(51) Int. Cl.³: **C 07 F 9/02,** C 07 F 9/165, C 10 M 1/48

(54) **Dithiophosphates métalliques sulfurisés et leur application comme additifs pour huiles lubrifiantes.**

(30) Priorité: **09.03.79 FR 7906059**

(43) Date de publication de la demande: **01.10.80 Bulletin 80/20**

(45) Mention de la délivrance du brevet: **14.10.81 Bulletin 81/41**

(84) Etats Contractants Désignés: **AT BE CH DE GB IT NL SE**

(56) Documents cités:
**US - A - 3 899 432**
**US - A - 3 944 495**

(73) Titulaire: **OROGIL**
**25, quai Paul Doumer**
**F-92408 Courbevoie (FR)**

(72) Inventeur: **Rivier, Georges**
**22bis, rue des Essarts**
**F-69500 Bron (FR)**

(74) Mandataire: **Fabre, Madeleine-France, et al**
**RHONE POULENC Service Brevets Chimie et Polymères B.P. 753**
**F-75360 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 016 675 B1

# Dithiophosphates métalliques sulfurisés et leur application comme additifs pour huiles lubrifiantes

La présente invention a pour objet de nouveaux dithiophosphates métalliques sulfurisés ou cosulfurisés et leur application comme additifs extrême-pression et anti-usure pour huiles lubrifiantes.

Il est connu d'après le brevet américain n° 3 944 495 d'améliorer les fluides de transmission de boites automatiques par addition de dithiophosphates métalliques de formule:

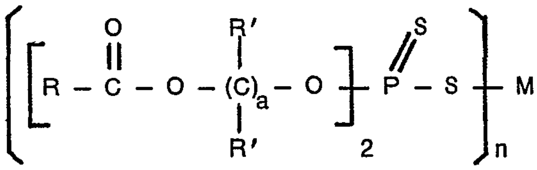

où:
- R représente un radical saturé aliphatique en $C_4$—$C_{30}$
- R' représente de l'hydrogène, un radical alcoyl en $C_1$—$C_6$ ou aryl en $C_6$—$C_9$,
- a est un nombre entier compris entre 2 et 12
- n correspond à la valence du métal M
- M représente un métal alcalin, alcalino-terreux ou un métal de transition.

De tels produits sont particulièrement bien adaptés au problème des fluides de transmission de boite automatique qui ne nécessite par des additifs de grande stabilité thermique.

Par contre de tels produits ne sont pas suffisamment stables thermiquement pour être utilisés comme additifs pour huiles moteur et notamment pour huiles moteur diesel.

Il est également connu pour améliorer les propriétés des huiles lubrifiantes (brevet français n° 1 310 171) d'utiliser des dialkyldithiophosphates métalliques préparés à partir de mono-alcools du type "néo", c'est-à-dire d'alcools dans lesquels l'atome de carbone voisin de l'atome de carbone fixé au groupe hydroxyle est substitué entièrement par des groupes alcoyles.

De tels produits présentent l'inconvénient de n'être que d'une efficacité moyenne et en outre de ne pouvoir être utilisés industriellement en raison du coût élevé des mono-alcools "néo".

La demanderesse a trouvé des dithiophosphates métalliques sulfurisés ou cosulfurisés stables thermiquement et pouvant être utilisés industriellement pour améliorer notamment les propriétes extrême-pression et anti-usure des huiles lubrifiantes.

Les dithiophosphates métalliques sulfurisés faisant l'objet de la présente invention sont caractérisés en ce qu'ils sont obtenus par sulfurisation d'une composition contenant:

— de 100 à 20%, de préférence de 100 à 50%, d'un dithiophosphate métallique de formule I:

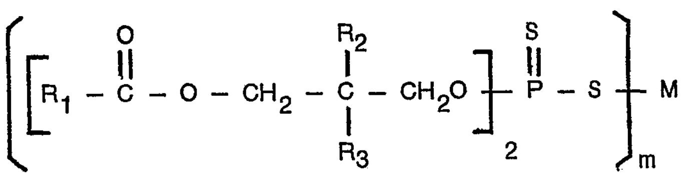

(I)

formule dans laquelle:

— $R_1$ représente:

un radical alcényle linéaire ou ramifié contenant de 2 à 24 atomes de carbone, et de préférence de 7 à 17 atomes de carbone, éventuellement substitué par au moins un groupe phényle,

un radical cycloaliphatique ou polycycloaliphatique insaturé contenant de 3 à 20 atomes de carbone, éventuellement substitué par un ou plusieurs groupes alcoyles contenant de 1 à 12 atomes de carbone.

— $R_2$ et $R_3$ sont semblables ou différents et représentent un radical alcoyle contenant de 1 à 12 atomes de carbone, et de préférence de 1 à 4 atomes de carbone;

— m représente la valence du métal M

— M représente un métal du groupe IIB, IIIB, IVB ou VIII de la classification périodique des éléments, et tout particulierement le zinc.

— et de 0 à 80%, de préférence de 0 à 50% d'un ester d'alcoyle de formule II:

$$R_4\text{—COO } R_5 \qquad \text{(II)}$$

formule dans laquelle:

$R_4$ représente un radical alcényle linéaire ou ramifié contenant de 2 à 24 atomes de carbone, et de préférence de 7 à 17 atomes de carbone,

et $R_5$ représente un radical alcoyle contenant de 1 à 12 atomes de carbone, et de préférence de 1 à 4 atomes de carbone,

à l'aide d'un agent de sulfurisation selon une quantité correspondant à un poids de soufre compris entre 0,5 et 10% par rapport au poids de composition à sulfuriser, et de préférence compris entre 1 et 5%.

Ladite opération de sulfurisation peut être réalisée selon les techniques classiques de sulfurisation à l'aide de soufre ou de chlorures de soufre. Par exemple celle-ci peut être réalisée à l'aide de soufre à une température supérieure à 150°C et généralement comprise entre 170 et 220°C; elle peut également être réalisée à l'aide de $S_2$, $Cl_2$ à une température comprise entre 60 et 100°C et suivie d'une opération de déshydrochloration à une température comprise entre 120 et 180°C. Il est preférable, en particulier pour des raisons économiques, de réaliser cette opération à l'aide de soufre.

Parmi les dithiophosphates métalliques pouvant être mis en oeuvre pour préparer les produits faisant l'objet de l'invention, on peut citer en particulier ceux de formule I dans laquelle $R_1$ représente un radical heptadécényle, décényle ou en $C_{19}H_{29}$ dérivant de l'acide abiétique. $R_2$ et $R_3$ représente un radical méthyle, éthyle ou butyle.

Parmi les esters d'alcoyle pouvant être mis en oeuvre pour préparer les produits faisant l'objet de l'invention, on peut citer en particulier ceux de formule II dans laquelle:

$R_4$ représente un radical heptadécényle ou décényle,

$R_5$ représente un radical méthyle, éthyle ou butyle.

Les dithiophosphates métalliques de formule I à mettre en oeuvre peuvent être préparés par action d'un composé basique du métal M, et tout particulièrement par action de l'oxyde de zinc, sur un acide dithophosphorique de formule (III):

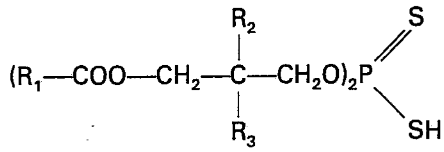

(III)

où $R_1$, $R_2$ et $R_3$ ont la signification donnée ci-dessus, avec une quantité de composé basique de métal M comprise entre la quantité stoechiométriquement nécessaire pour neutraliser ledit acide dithiophosphorique et deux fois cette quantité stoechiométrique.

Cette opération peut être réalisée à une température comprise entre 20 et 200°C, de préférence entre 60 et 150°C avec une quantité de composé basique de métal M de préférence comprise entre 1,1 fois et 1,5 fois la quantité stoechiométrique.

L'acide dithiophosphorique de formule I peut être préparé par action du pentasulfure de phosphore sur un monoesteralcool de formule IV:

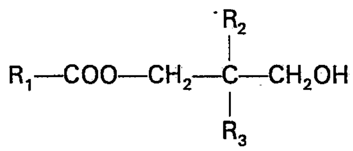

(IV)

où $R_1$, $R_2$ et $R_3$ ont la signification donnée ci-dessus, avec une quantité de $P_2S_5$ en excès de 5 à 20% en mole par rapport à la quantité de $P_2S_5$ stoechiométriquement nécessaire.

Cette opération peut être réalisée à une température comprise entre 50 et 200°C, de préférence entre 70 et 150°C avec une quantité de $P_2S_5$ correspondant de préférence à un excès de 5% en mole par rapport à la stoechiométrie.

Le monoesteralcool de formule IV peut être préparé par action d'un acide de formule $R_1COOH$ où $R_1$ à la signification donnée ci-dessus avec un diol de formule (V)

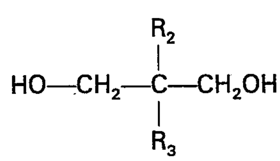

(V)

où $R_2$ et $R_3$ ont la signification donnée ci-dessus avec un rapport molaire acid/diol compris entre 1/1 et 1/15 et de préférence entre 1/2 et 1/12.

Cette opération peut être réalisée à une température comprise entre 50 et 300°C et de préférence entre 80 et 200°C, en présence d'un catalyseur acide.

Parmi les acides de formule $R_1$ COOH pouvant être mis en oeuvre, on peut citer l'acide oléïque, l'acide undécylénique, l'acide abiétique.

Parmi les diols de formule V pouvant être mis en oeuvre on peut citer: le néopentylglycol, l'éthyl-2 butyl-n-2 propanediol-1,3.

La présente invention à également pour objet l'application des dithiophosphates métalliques sulfurisés ou cosulfurisés ci-dessus décrits comme additifs extrême-pression et anti-usure pour huiles lubrifiantes.

Parmi les huiles lubrifiantes pouvant être améliorées par addition desdits dithiophosphates sulfurisés ou cosulfurisés, on peut citer les huiles naturelles de viscosité comprise entre 20,6 cst et 541 cst à 37,8°C (soit entre 100 et 250 SUS à 100°F) ou les bases synthétiques ou semi-synthétiques (hydrocarbures synthétiques, esters, polyesters, polyéthers . . .) de viscosités comparables.

Les quantités desdits dithiophosphates sulfurisés ou cosulfurisés que l'on peut introduire dans les huiles lubrifiantes sont comprises entre 0,3 et 15%, en poids. Ces quantités de dithiophosphates sont fonction de l'utilisation future de l'huile, à savoir comme huile pour moteur, boite à vitesse ou transmission automatique, fluide hydraulique ou huile de coupe pour l'industrie mécanique.

Des adjuvants antioxydants, anti-corrosion, anti-mousse, détergents-dispersants, d'autres adjuvants extrême-pression et anti-mousse . . . peuvent être introduits sans qu'il ne résulte de problème lié à la compatibilité ou une perte de niveau des performances.

Les exemples suivants sont donnés à titre indicatif et ne peuvent être considérés comme une limite du domaine et de l'esprit de l'invention.

Exemple 1

*Sulfurisation du bis 0,0 (monooléate de diméthyl-2,2 propanediyle-1,3) dithiophosphate de zinc,* de formule:

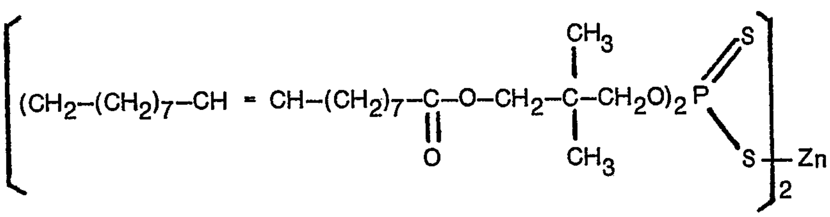

a) Préparation du monooléate du 2.2 diméthyl-1,3 propane diol

Dans un ballon tricol de 1 litre on charge:

— 282 g (soit 1 mole) d'acide oléique
— 416 g (soit 4 moles) de néopentylglycol(≃1% d'eau)
— 14 g de terre acide à base d'acide chlorhydrique (terre CLARCIL commercialisée par Sud-Chemie A—G).

On chauffe à 180°C pendant 4 heures en maintenant une pression de 50 mmHg; 24,5 g d'eau distillent;

Après refroidissement, on charge 300 g d'hexane et 100 g d'eau; le milieu est agité pendant 30 minutes puis on sépare la couche organique par décantation. Cette opération de lavage est répétée 3 fois. La phase organique recueillie est distillée pour éliminer le solvant.

On récupère ainsi 356 g (soit 0,967 mole) de l'ester recherché présentant une pureté de 95,6% (déterminée par résonance magnétique nucléaire), l'impureté restante étant du néopentylglycol.

Le rendement en ester est de 96,7% par rapport à l'acide oléique.

b) Préparation de l'acide bis 0,0 (monooléate de diméthyl-2,2 propane diyle-1,3) dithiophosphorique

Dans un ballon tricol de 1 litre, on charge 346,4 g (soit 0,9 mole) de l'ester préparé ci-dessus, puis en 3 heures 50 g (soit 0,225 mole) de pentasulfure de phosphore en maintenant la température à 115°C.

Après l'addition de $P_2S_5$ on maintient la température à 115°C pendant 30 mn puis on élimine les traces d'$H_2S$ en diminuant la pression progressivement jusqu'à 30 mm de mercure.

On obtient 380 g de l'acide dithiophosphorique recherché, dont la composition déterminée par analyse élémentaire est la suivante:

| | Calculé | Trouvé |
|---|---|---|
| Phosphore | 3,73% | 3,6% |
| Soufre | 7,71% | 7,2% |

c) Neutralisation par l'oxyde de zinc

Dans un ballon tricol de 1 litre on charge les 380 g (soit 0,46 mole) de l'acide dithiophosphorique ci-dessus préparé, puis en 1 heure 22,3 g (soit 0,276 mole) d'oxyde de zinc (ce qui représente un excès de 30% par rapport à la stoechiométrie) en maintenant la température à 105°C.

Après l'addition de l'oxyde de zinc, on diminue progressivement la pression jusqu'à 30 mm de mercure pour éliminer l'eau de formation.

Après refroidissement le milieu est repris par 500 ml d'hexane puis filtré pour éliminer l'oxyde de zinc en excès.

On obtient ainsi 315 g de bis O,O (monooleate de diméthyl-2,2 propanediyle-1,3) dithiophosphate de zinc, qui est un composé visqueux et limpide, légèrement coloré présentant un pH de 5,2.

La composition du produit obtenu, déterminée par analyse élémentaire est la suivante:

| | Calculé | Trouvé |
|---|---|---|
| Phosphore | 3,60% | 3,7% |
| Zinc | 3,78% | 3,5% |
| Soufre | 7,43% | 7,2% |

d) Sulfurisation

On charge dans un ballon tricol 100 g du dithiophosphate de zinc ci-dessus préparé; on chauffe vers 218—220°C puis on ajoute 4 g de fleur de soufre (soit 4% en poids) en maintenant la température à 218—220°C pendant 2 heures.

On obtient une huile colorée dont la composition est la suivante:

| | Trouvé |
|---|---|
| Phosphore | 3,3% |
| Zinc | 2,96% |
| Soufre | 8,3% |

Exemple 2

On sulfurise 100 g du dithiophosphate de zinc obtenu à l'exemple 1 c) selon le mode opératoire décrit en 1 d) à l'aide de 2 g de fleur de soufre au lieu de 4 g.

Le produit obtenu a la composition suivante:

| | Trouvé |
|---|---|
| Phosphore | 3,28% |
| Zinc | 4,26% |
| Soufre | 7,18% |

Exemple 3

*Cosulfurisation du bis O,O (monooléate de diméthyl-2,2 propanediyle-1,3) dithiophosphate de zinc et de l'oléate d'éthyle*

On charge 100 g du dithiophosphate de zinc obtenu à l'exemple 1 c) et 50 g d'oléate d'éthyle.

On chauffe à 210—215°C, on ajoute 6 g de fleur de soufre (soit 4% en poids) et on maintient la température à 210—215°C pendant 2 heures.

On obtient 152 g d'un produit ayant la composition suivante:

| | Trouvé |
|---|---|
| Phosphore | 2 % |
| Zinc | 1,9% |
| Soufre | 7,2% |

Exemple 4

*Sulfurisation du bis O,O (monoundecanoate de diméthyl-2,2 propanediyl-1,3) dithiophosphate de zinc* de formule:

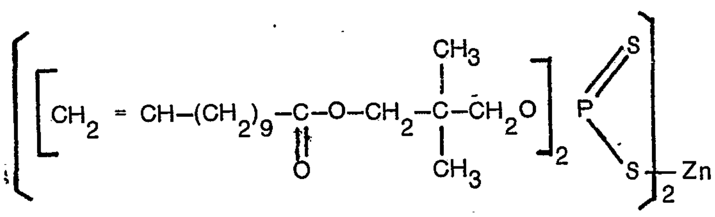

a) Préparation de l'undecenoate de diméthyl-2,2 propanediol

L'opération décrite à l'exemple 1 a) est réalisée à partir de:

— 184 g (soit 1 mole) d'acide undécénoïque
— 416 g (soit 4 moles) de neopentylglycol
— 14 g de Clarcil

pendant 5 heures à 150°C.

On récupère avec un rendement de 90%, 248 g de l'ester recherché présentant une pureté de 98%.

b) Préparation de l'acide bis O,O (monoundécenoate de diméthyl-2,2 propanediyl-1,3) dithiophosphorique.

L'opération décrite à l'exemple 1 b) est réalisée à partir de:

— 165 g (soit 0,6 mole) de l'ester préparé ci-dessus
— 33,5 g (soit 0,15 mole) de $P_2S_5$

On obtient 180 g de l'acide dithiophosphorique recherché dont la composition est la suivante:

| | Calculé | Trouvé |
|---|---|---|
| Phosphore | 4,89% | 4,7% |
| Soufre | 10,09% | 9,9% |

c) Neutralisation par l'oxyde de zinc.

L'opération décrite à l'exemple 1 c) est réalisée à partir de:

— 127 g (soit 0,2 mole) de l'acide dithiophosphorique préparé ci-dessus.
— 10,5 g (soit 0,13 mole) de ZnO (excès de 30%)

On obtient ainsi 115 g de bis O,O (monoundécénoate de diméthyl-2,2 propanediyl-1,3) dithiophosphate de zinc dont le pH est de 5,1 et dont la composition est la suivante:

| | Calculé | Trouvé |
|---|---|---|
| Phosphore | 4,66% | 4,5% |
| Zinc | 4,88% | 4,7% |
| Soufre | 9,62 ù | 9,5% |

d) Sulfurisation

On charge 100 g du dithiophosphate de zinc ci-dessus préparé; on chauffe vers 215—218°C, on ajoute 4 g de fleur de soufre et on maintient la température de 215—218°C pendant 2 heures.

On obtient 101 g d'un produit ayant la composition suivante:

| | Trouvé |
|---|---|
| Phosphore | 4,4% |
| Zinc | 4,5% |
| Soufre | 10,9% |

Exemple 5

*Cosulfurisation du bis O,O (undécénoate de diméthyl-2,2 propanediyl-1,3) dithiophosphate de zinc et de l'undécénoate de méthyle*

L'opération décrite à l'exemple 3 est réalisée à partir de 100 g du dithiophosphate de zinc obtenu à 1'exemple 4c), 50 g d'undécénoate de méthyle et 6 g de fleur de soufre.

On obtient 154 g d'un produit ayant la composition suivante:

| | Trouvé |
|---|---|
| Phosphore | 2,5% |
| Zinc | 2,6% |
| Soufre | 9,5% |

Exemple 6

*Sulfurisation du bis O,O (monoabiétate de diméthyl-2,2 propanediyl-1,3) dithiophosphate de zinc, de formule:*

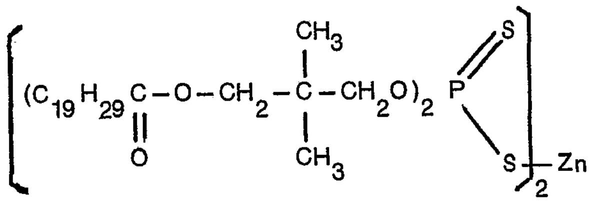

a) Préparation du monoabiétate de diméthyl-2,2 propanol-1

L'opération décrite à l'exemple 1 a) est réalisée à partir de:

— 293 g (soit 1 mole) d'acide abiétique
— 146 g (soit 4 moles) de néopentylglycol
— 14 g de Clarcil

pendant 5 heures à 150°C.

On récupère avec un rendement de 70%, 280 g de l'ester recherché présentant une pureté de 95%.

b) Préparation de l'acide bis O,O (monobiétate de diméthyl-2,2 propanediyl-1,3) dithiophosphorique.

L'opération décrite à l'exemple 1 b) est réalisée à partir de:

— 240 g (soit 0,6 mole) de l'ester préparé ci-dessus
— 33,5 g (soit 0,15 mole) de $P_2S_5$

On obtient 250 g de l'acide dithiophosphorique recherché dont la composition est la suivante:

| | Calculé | Trouvé |
|---|---|---|
| Phosphore | 3,64% | 3,5% |
| Soufre | 7,51% | 7,5% |

c) Neutralisation par l'oxyde de zinc

L'opération décrite à l'exemple 1 c) est réalisée à partir de:

— 170 g (soit 0,2 mole) de l'acide dithiophosphorique préparé ci-dessus.
— 10,5 g (soit 0,13 mole) de ZnO (excès de 30%)

On obtient ainsi 165 g de bis O,O (monoabiétate de diméthyl-2,2 propanediyl-1,3) dithiophosphate de zinc dont le pH est de 5,2 et dont la composition est la suivante:

| | Calculé | Trouvé |
|---|---|---|
| Phosphore | 3,51% | 3,4% |
| Zinc | 3,68% | 3,4% |
| Soufre | 7,24% | 7,0% |

d) Sulfurisation

L'opération décrite à l'exemple 1 d) est réalisée à partir de:

— 100 g de dithiophosphate de zinc préparé ci-dessus
— 2 g de fleur de soufre.

à une température de 218°C pendant 3 h.

On obtient une huile dont la composition est la suivante:

| | Trouvé |
|---|---|
| Phosphore | 3,2% |
| Zinc | 3,0% |
| Soufre | 8,6% |

Exemple 7

*Cosulfurisation du bis O,O (monoabietate de diméthyl-2,2 propanediyl-1,3) dithiophosphate de zinc et de l'oléate de méthyle.*

L'opération décrite à l'exemple 3 est réalisée à partir de:

— 100 g du dithiophosphate de zinc obtenu à l'exemple 6 c).
— 100 g d'oléate de méthyle
— 4 g de fleur de soufre (soit 2% en poids)

à une température de 218°C pendant 3 heures.

Le produit obtenu à la composition suivante:

| | Trouvé |
|---|---|
| Phosphore | 1,6% |
| Zinc | 1,5% |
| Soufre | 5,2% |

Exemple 8

*Cosulfurisation du bis O,O (monoundeceneate de dimethyl-2,2 propanediyl-1,3) dithiophosphate de zinc et de l'oléate de butyle.*

L'opération décrite à l'exemple 3 est réalisée à partir de:

—100 g de dithiophosphate de zinc obtenu à l'exemple 4 c).
— 25 g d'oléate de butyle
— 3,4 g de soufre (soit 3% en poids).

à 215°C pendant 3 heures.

On obtient 128 g de produit ayant la composition suivante:

| | Trouvé |
|---|---|
| Phosphore | 3,9% |
| Zinc | 4,0% |
| Soufre | 12,5% |

Exemple 9

*Sulfurisation du bis O,O (monooléate de l'éthyl-2 n-butyl-2 propanediyl-1,3) dithiophosphate de zinc, de formule:*

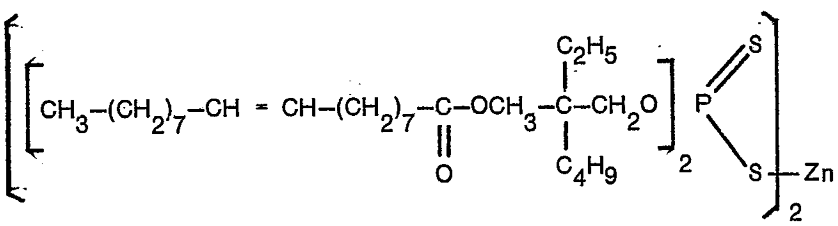

a) Préparation du monooléate de l'éthyl-2 n-butyl-2 propanol-1

L'opération décrite à l'exemple 1 a) est réalisée à partir de:

— 282 g (soit 1 mole) d'acide oléique
— 640 g (soit 4 moles) d'éthyl-2 n-butyl-2 propanediol-1,3
— 14 g de Clarcil

pendant 4 heures à 170°C.

On récupère avec un rendement de 91% 402 g de l'ester recherché présentant une pureté de 96%.

b) Préparation de l'acide bis O,O (monooléate de l'éthyl-2 n-butyl-2 propanediyl-1,3) dithiophosphorique

L'opération décrite à l'exemple 1 b) est réalisée à partir de:

— 265 g (soit 0,6 mole) de l'ester préparé ci-dessus
— 33,5 g (soit 0,15 mole) de $P_2S_5$

On obtient 280 g de l'acide dithiophosphorique recherché dont la composition est la suivante:

| | Calculé | Trouvé |
|---|---|---|
| Phosphore | 3,29% | 3,40% |
| Soufre | 6,79% | 6,80% |

c) Neutralisation par l'oxyde de zinc

L'opération décrite à l'exemple 1 c) est réalisée à partir de:

— 188,5 g (soit 0,2 mole) de l'acide dithiophosphorique préparé ci-dessus
— 10,5 g (soit 0,13 mole) de ZnO (excès de 30%).

On obtient 180 g de bis O,O (monooleate de l'éthyl-2 n-butyl-2 propanediyl-1,3) dithiophosphate de zinc dont le pH est de 5,8 et dont la composition est la suivante:

| | Calculé | Trouvé |
|---|---|---|
| Phosphore | 3,18% | 3,2% |
| Zinc | 3,34% | 3,2% |
| Soufre | 6,57% | 6,6% |

d) Sulfurisation

L'opération décrite à l'exemple 1 d) est réalisée à partir de:

— 100 g de dithiophosphate de zinc préparé ci-dessus
— 3 g de fleur de soufre

à 215°C pendant 3 heures.

On obtient 102 g de produit ayant la composition suivante:

| | Trouvé |
|---|---|
| Phosphore | 3,2% |
| Zinc | 3,1% |
| Soufre | 9,4% |

Exemple 10

On prépare une composition lubrifiante par addition à une huile 10W30 d'une quantité de produit obtenu à l'un des exemples 1 à 9, correspondant à 0,1% du phosphore.

Les propriétés mécaniques de cette composition sont testées sur:

1) Machine 4 billes, selon la norme ASTM D 2783-69T; ce test donne le diamètre en mm de l'empreinte sous une charge de grippage de 70, 90, 110 et 130 kg, ainsi que la charge de soudure en kg.

2) Machine Falex; ce test donne l'usure de l'axe (c'est-à-dire de l'éprouvette d'usure) en mg ou bout de 30 mn sous une pression de 500 lbs (271,5 kg).

La tenue à l'oxydation de cette composition est évaluée par le test d'oxydation Mobil consistant à oxyder 33 g d'huile contenant l'additif, en la chauffant à 180°C pendant 50 heures en présence de catalyseurs d'oxydation (Pb-Cu) sous un débit d'air de 14 l/h et à mesurer l'augmentation de viscosité à 210°F (98,9°C) de l'huile oxydée par rapport à l'huile neuve.

Des tests comparables sont réalisés sur des compositions dans lesquelles le produit de l'un des exemples 1 à 9, est remplacé par la même quantité, exprimée en % de phosphore, d l'un des additifs du commerce suivants:
contenant tous du phosphore:

— additif A, de marque déposée "ECA 5215" et commercialisé par EXXON
— additif B, de marque déposée "LUBRIZOL 797" et commercialisé par LUBRIZOL
— additif C, de marque déposée "IMPROVEX 33" et commercialisé par RHONE-POULENC
— additif D, de marque déposée "OLOA 260" et commercialisé par ORONITE
— additif E, de marque déposée "OLOA 269" et commercialisé par ORONITE

Le résultat de l'ensemble de ces tests figure au tableau I.

On constate que les compositions faisant l'objet de l'invention possèdent un bon niveau général de performances en ce qui concerne leurs propriétés mécaniques et présentent une bonne tenue de ces performances malgré l'oxydation. Les propriétés antioxydantes sont également très bonnes.

Exemple 11

On prépare des compositions lubrifiantes par addition à une huile l0W30 des produits préparés aux exemples 1, 2 et 3 à différentes concentrations.

Ces compositions sont testées selon les méthodes décrites à l'exemple précédent; on teste en outre ces compositions sur Machine 4 billes sous une charge de 150 kg.

Le résultat des ces tests figure aux tableaux II et II'.

On constate que ces compositions possèdent un très bon niveau général de performances en ce qui concerne leurs propriétés mécaniques et antioxydantes.

Exemple 12

On prépare une composition lubrifiante par addition à une huile 10W30 d'une quantité de produit obtenu aux exemples 1 et 3, correspondant à 0,1% en phosphore.

On préparé également des compositions lubrifiantes par addition de 0,1% de phosphore des additifs D, B et E.

Ces compositions sont testées quant à leur stabilité thermique suivant le test CINCINNATI/MILACRON; ce test consiste à maintenir les compositions à 135°C pendant 138 heures en présence de fer et de cuivre, puis on mesure les paramètres suivants:

— modification du poids des éprouvettes de fer et de cuivre
— poids de sédiments
— coloration de l'éprouvette de cuivre (test ASTM D 130)
— augmentation de viscosité.

Les résultats de ce test figurent au tableau III.

On constate que la composition obtenue à l'aide des produits des exemples 1 et 3 présentent une très bonne stabilité thermique par rapport à celle des produits du commerce, sans corrosion du fer ou du cuivre.

Exemple 13

On prépare une composition lubrifiantes (I) à base d'un mélange d'huile de base correspondant à une huile 15W40 contenant 5% d'un paquet d'additifs constitué de:

— 35% d'un dispersant à base d'une alcénylsuccinimide obtenu en faisant réagir un anhydride succinique substitué par un polyisobutène (nombre d'atomes de carbone compris entre 50 et 60) avac la triéthylènetétramine.

— 15% d'un détergent à base d'un sel de calcium neutre d'un acide sulfonique.

— 20% d'un détergent à base d'alkylphénate de calcium, dont le radical alkyl contient 12 atomes de carbone, et dont le TBN (total basic number Norme ASTM D 2896) est supérieur à 200 mg de potasse par gramme.

— 20% d'un détergent à base d'un sulfonate de magnésium de TBN supérieur à 200 mg.

— 1% d'un anti-oxydant du type tertiobutylphenol.

— et de l'huile de dilution.

Composition II

On ajoute à la composition I ci-dessus 0,1% de phosphore sous forme d' "Oloa 269".

Composition III

On ajoute à la composition I ci-dessus, 0,05% de phosphore sous forme d' "Oloa 269" et 0,05% de phosphore sous forme du produit obtenu à l'exemple 3.

Les compositions II et III sont testées à l'aide de l'essai ASTM PV 1. Les resultats de cet essai figurent au tableau IV.

On constate que la composition III présente de très bonnes caractéristiques au niveau de l'usure des cames, tout en possédant de bonnes propriétés au niveau des boues et des vernis.

Exemple 14

Cet exemple a pour but de montrer l'amélioration apportée par les produits de l'invention, concernant les pertes d'énergie par frottement dans les moteurs à combustion interne.

L'essai consiste à examiner le couple résistant produit par entraînement dudit moteur par un moteur électrique tournant à 1500, 3000 et 5500 tours/mn, la température de l'huile étant maintenue à 100°C.

On constate que l'énergie absorbée lorsque la composition III est mise en oeuvre est inférieure à 10% de celle absorbée lorsque la composition II est mise en oeuvre.

TABLEAU I

| Produit des Exemples | % en poids de produit | Propriétés mécaniques | | | | | | | Oxydation |
|---|---|---|---|---|---|---|---|---|---|
| | | Avant oxydation | | | | | | Après oxydation | |
| | | Grippage – Emprunte en mm | | | | charge de soudure en kg | Falex en mg | Grippage Emprunte en mm –100 kg– | Augmentation de viscosité en % |
| | | 70 kg | 90 kg | 110 kg | 130 kg | | | | |
| 1 | 3 | 0,4 | 1,8 | – | | 300 | 6,7 | 1,7 | 70 |
| 2 | 3 | 0,4 | 1,5 | – | | 300 | 8,2 | 1,9 | 80 |
| 3 | 5 | 0,8 | 1,5 | 2,8 | | 300 | 0,7 | 1,7 | 30 |
| 4 | 2,3 | 0,45 | 2,0 | – | | 300 | 7,0 | 1,6 | 80 |
| 5 | 4 | 0,4 | 1,9 | 2,4 | | 300 | 4,7 | 1,8 | 70 |
| 6 | 3,1 | 0,5 | 2,0 | – | | 300 | 3,9 | 1,7 | 60 |
| 7 | 6,25 | 0,4 | 1,9 | – | | 300 | 5,1 | 1,8 | 70 |
| 8 | 2,6 | 0,5 | 1,9 | – | | 300 | 5,2 | 1,8 | 60 |
| 9 | 3,1 | 0,3 | 1,6 | – | | 300 | 7,5 | 1,7 | 70 |
| A | 3,73 | – | 0,5 | 0,5 | 2,5 | 300 | 8,7 | 2,0 | 80 |
| B | 4,08 | – | 2,6 | – | – | 200 | 1,0 | – | gelee |
| C | 1,24 | – | 2,5 | – | – | 250 | 14,9 | – | gelee |
| D | 3,45 | – | 2,6 | – | – | 300 | 23,0 | 2,4 | 90 |
| E | 1,35 | – | 0,5 | 2,2 | – | 250 | 10,5 | 2,6 | 150 |

TABLEAU II

| Produit des Exemples | % en poids de produit | Propriétés mécaniques | | | | | | | Oxydation |
|---|---|---|---|---|---|---|---|---|---|
| | | Avant oxydation | | | | | | Après oxydation | |
| | | Grippage – Emprunte en mm | | | | charge de soudure en kg | Falex en mg | Grippage Emprunte en mm – 100 kg – | Augmentation de viscosité en % |
| | | 70 kg | 90 kg | 110 kg | 130 kg | | | | |
| 1 | 0,1 | 2,6 | 2,8 | – | – | 200 | rupture | – | 600 |
| | 1,5 | 2 | 2,2 | – | – | 300 | 48,5 | 1,8 | 90 |
| | 3,0 | 0,4 | 1,8 | – | – | 300 | 6,7 | 1,7 | 70 |
| | 4,5 | 0,4 | 1,5 | 2,5 | – | 300 | 11,1 | 1,8 | 25 |
| 2 | 0,1 | 2,6 | – | – | – | 250 | rupture | – | gelée |
| | 1,5 | 1,5 | 2,2 | – | – | 250 | 14,2 | – | gelée |
| | 3 | 0,4 | 1,5 | – | – | 300 | 8,2 | 1,9 | 80 |
| | 4,5 | 0,4 | 0,4 | 2,3 | – | 300 | 10,5 | 1,8 | 60 |
| 3 | 0,1 | 2,6 | 2,8 | – | – | <200 | rupture | – | 600 |
| | 1,5 | 2 | 2,2 | – | – | 300 | 38,0 | 1,9 | 90 |
| | 3,0 | 1,5 | 2,1 | – | – | 300 | 1,5 | 1,8 | 70 |
| | 5 | 0,8 | 1,5 | 2,8 | – | 300 | 0,7 | 1,7 | 30 |

TABLEAU III

| Produit | Eprouvette de Fe | Eprouvette Cu | Poids de sédiments mg | Augmentation de viscosité en % | Aspect | Lame de cuivre ASTM D 10 |
|---|---|---|---|---|---|---|
| ex 1 | − 0,2 mg | − 4,9 mg | 0 | 7 | limpide | 2 C |
| ex 3 | + 0,8 mg | − 13,1 mg | 1 | 10 | limpide | 2 C |
| D | + 0,8 mg | − 23,7 mg | 21 | 50 | trouble | 4 a |
| B | − 1 mg | − 66,7 mg | 10 | 30 | trouble | 4 a |
| E | + 0,4 mg | − 20,3 mg | 31 | 15 | limpide | 4 b |

TABLEAU IV

| Composition | II | III |
|---|---|---|
| A S | 9,6 | 9,7 |
| V P | 8,4 | 7,9 |
| A V | 8,5 | 7,9 |
| Usure des cames | 3,2 | 0,7 |
| Usure maximum | 7,2 | 0,9 |

AS : Average sludge = valeur moyenne des boues

VP: Varnish piston = vernis sur les pistons

AV: Average varnish = valeur moyenne des vernis

**Revendications pour les Etats contractants: BE CH DE GB IT NL SE**

1. Dithiophosphates métalliques sulfurisés caractérisés en ce qu'ils sont obtenus par sulfurisation d'une composition contenant:

— de 100 à 20%, d'un dithiophosphate métallique de formule I:

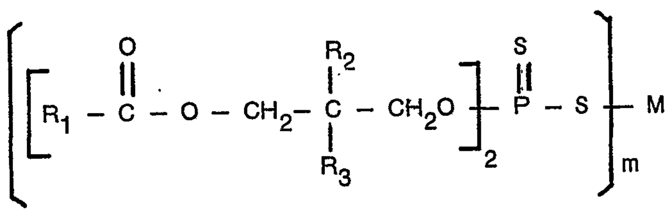

(I)

formule dans laquelle:

— $R_1$ représente:

un radical alcényle linéaire ou ramifié contenant de 2 à 24 atomes de carbone, éventuellement substitué par au moins un groupe phényle.

un radical cycloaliphatique ou polycycloaliphatique insaturé contenant de 3 à 20 atomes de carbone, éventuellement substitué par un ou plusieurs groupes alcoyles contenant de 1 à 12 atomes de carbone.

— $R_2$ et $R_3$ sont semblables ou différents et représentent un radical alcoyle contenant de 1 à 12 atomes de carbone;

— m représente la valence du métal M

— M représente un métal du groupe IIB, IIIB, IVB ou VIII de la classification périodique des éléments.

— et de 0 à 80%, d'un ester d'alcoyle de formule II:

$$R_4—COO\ R_5 \qquad (II)$$

formule dans laquelle:

$R_4$ représente un radical alcényle linéaire ou ramifié contenant de 2 à 24 atomes de carbone, et $R_5$ représente un radical alcoyle contenant de 1 à 12 atomes de carbone, à l'aide d'un agent de sulfurisation selon une quantité correspondant à un poids de soufre compris entre 0,5 et 10% par rapport au poids de composition à sulfuriser.

2. Dithiophosphates métalliques sulfurisés selon la revendication 1, caractérisés en ce qu'ils sont obtenus par sulfurisation d'une composition contenant de 100 à 50% de dithiophosphate métallique de formule I et de 0 à 50% d'ester d'alcoyle de formule II.

3. Dithiophosphates métalliques sulfurisés selon revendication 1 ou 1a revendication 2, caractérisé en ce que M est du zinc.

4. Dithiophosphates métalliques sulfurisés selon l'une quelconque des revendications 1 à 3, caractérisés en ce que $R_1$ contient de 7 à 17 atomes de carbone lorsqu'il représente un radical alcoyle

$R_2$ et $R_3$ contiennent de 1 à 4 atomes de carbone, $R_4$ contient de 7 à 17 atomes de carbone et $R_5$ contient de 1 à 4 atomes de carbone.

5. Dithiophosphates métalliques sulfurisés selon l'une quelconque des revendications précédentes caractérisés en ce que $R_1$ représente un radical decenyle, heptadecenyle ou un radical en $C_{19}$ $C_{29}$ dérivant de l'acide abietique, $R_2$ et $R_3$ représentent un radical méthyle, éthyle ou butyle, $R_4$ représente un radical decenyle ou heptadecenyle, $R_5$ représente un radical méthyle, éthyle ou butyle.

6. Dithiophosphates métalliques sulfurisés selon l'une quelconque des revendications 1 à 5 caractérisés en ce que la sulfurisation est réalisée à l'aide de 1 à 5% en poids de soufre par rapport à la composition à sulfuriser.

7. Dithiophosphates métalliques sulfurisés selon l'une quelconque des revendications 1 à 5 caractérisés en ce que la sulfurisation est réalisée à l'aide de soufre à une température supérieure à 150°C.

8. Dithiophosphates métalliques sulfurisés selon la revendication 7 caractérisés en ce que la sulfurisation est réalisé à une température comprise entre 170 et 220°C.

9. Application des dithiophosphates métalliques sulfurisés faisant l'objet de l'une quelconque des revendications 1 à 8 comme additifs permettant d'améliorer les propriétés extrême-pression et anti-usure des huiles lubrifiantes.

10. Application des dithiophosphates métalliques sulfurisés selon la revendication 9 par mise en oeuvre de 0,3 à 15% en poids desdits dithiophosphates métalliques sulfurisés par rapport au poids d'huiles.

**Patentansprüche für die Vertragsstaaten: BE CH DE GB IT NL SE**

1. Mit Schwefel behandelte Metall-dithiophosphate, dadurch gekennzeichnet, daß sie durch Behandlung eines Gemisches enthaltend:

— 100 bis 20% eines Metall-dithiophosphats der allgemeinen Formel I

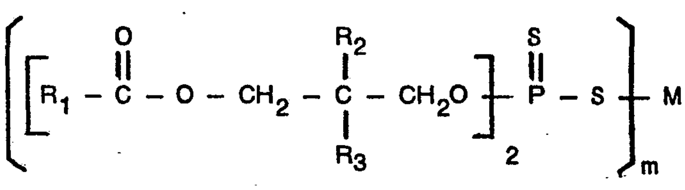

(I)

in der $R_1$

eine lineare oder verzweigte Alkenylgruppe enthaltend 2 bis 24 Kohlenstoffatome, gegebenenfalls substituiert mit mindestens einer Phenylgruppe,

eine ungesättigte cycloaliphatische oder polycycloaliphatische Gruppe enthaltend 3 bis 20 Kohlenstoffatome, gegebenenfalls substituiert mit ein oder mehreren Alkylgruppen, die 1 bis 12 Kohlenstoffatome enthalten, bedeutet

$R_2$ und $R_3$ gleich oder verschieden sind und für eine Alkylgruppe mit 1 bis 12 Kohlenstoffatomen stehen,

m die Wertigkeit des Metalls bedeutet,

M ein Metall aus der Gruppe IIB, IIIB, IVB oder VIII des Periodensystems der Elemente bedeutet;

— sowie 0 bis 80% eines Alkylesters der allgemeinen Formel II

$$R_4\text{—COO } R_5 \qquad (II)$$

in der

$R_4$ eine lineare oder verzweigte Alkenylgruppe mit 2 bis 24 Kohlenstoffatomen bedeutet und $R_5$ für eine Alkylgruppe mit 1 bis 12 Kohlenstoffatomen steht, mit einem Mittel zur Schwefelbehandlung in einer Menge entsprechend einem Schwefelgewicht von 0,5 bis 10%, bezogen auf das Gewicht des Gemisches, das mit Schwefel behandelt werden soll, erhalten worden sind.

2. Mit Schwefel behandelte Metall-dithiophosphate nach Anspruch 1, dadurch gekennzeichnet, daß sie durch Behandlung eines Gemisches enthaltend 100 bis 50% Metall-dithiophosphat der Formel I sowie 0 bis 50% Alkylester der Formel II mit Schwefel erhalten worden sind.

3. Mit Schwefel behandelte Metall-dithiophosphate nach Anspruch 1 oder Anspruch 2, dadurch gekennzeichnet, daß M Zink bedeutet.

4. Mit Schwefel behandelte Metall-dithiophosphate nach einem der Ansprüche 1 bis 3, dadurch gekennzeichnet, daß $R_1$ 7 bis 17 Kohlenstoffatome enthält, wenn es für eine Alkenylgruppe steht, $R_2$ und $R_3$ 1 bis 4 Kohlenstoffatome enthalten, $R_4$ 7 bis 17 Kohlenstoffatome enthält und $R_5$ 1 bis 4 Kohlenstoffatome enthält.

5. Mit Schwefel behandelte Metall-dithiophosphate nach einem der vorangangenen Ansprüche, dadurch gekennzeichnet, daß $R_1$ eine Decenylgruppe, Heptadecenylgruppe oder eine von Abietinsäure abgeleitete $C_{19}H_{29}$-Gruppe ist, $R_2$ und $R_3$ für eine Methylgruppe, Äthylgruppe oder Butylgruppe stehen,

$R_4$ eine Decenylgruppe oder Heptadecenylgruppe bedeutet und $R_5$ für eine Methylgruppe, Äthylgruppe oder Butylgruppe steht.

6. Mit Schwefel behandelte Metall-dithiophosphate nach einem der Ansprüche 1 bis 5, dadurch gekennzeichnet, daß die Schwefelbehandlung mit Hilfe von 1 bis 5 Gew.-% Schwefel, bezogen auf das Gemisch, welches mit Schwefel behandelt werden soll, vorgenommen worden ist.

7. Mit Schwefel behandelte Metall-dithiophosphate nach einem der Ansprüche 1 bis 5, dadurch gekennzeichnet, daß die Schwefelbehandlung mit Hilfe von Schwefel bei einer Temperatur oberhalb 150°C vorgenommen worden ist.

8. Mit Schwefel behandelte Metall-dithiophosphate nach Anspruch 7, dadurch gekennzeichnet, daß die Schwefelbehandlung bei einer Temperatur zwischen 170 und 220°C vorgenommen worden ist.

9. Verwendung der mit Schwefel behandelten Metall-dithiophosphate nach einen der Ansprüche 1 bis 8 als Zusätze zur Verbesserung der Hockdruck- und Anti-verschleißeigenschaften von Schmierölen.

10. Verwendung der mit Schwefel behandelten Metall-dithiophosphate nach Anspruch 9 durch Einsatz von 0,3 bis 15 Gew.-% der mit Schwefel behandelten Metall-dithiophosphate, bezogen auf das Gewicht des Schmieröls.

**Claims for the Contracting States: BE CH DE GB IT NL SE**

1. Sulphurised metal dithiophosphates, characterised in that they are obtained by sulphurising a composition containing:

from 100 to 20% of a metal dithiophosphate of the formula I:

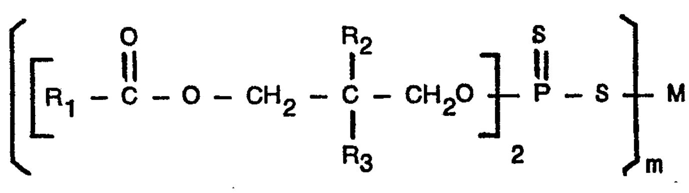

(I)

in which formula:

$R_1$ represents a linear or branched alkenyl radical containing from 2 to 24 carbon atoms, which is optionally substituted by at least one phenyl group, or an unsaturated cycloaliphatic or polycycloaliphatic radical containing from 3 to 20 carbon atoms, which is optionally substituted by one or more alkyl groups containing from 1 to 12 carbon atoms,

$R_2$ and $R_3$ are similar or different and represent an alkyl radical containing from 1 to 12 carbon atoms,

m represents the valency of the metal M, and

M represents a metal from group IIB, IIIB, IVB or VIII of the periodic classification of the elements, and from 0 to 80% of an alkyl ester of the formula II:

$$R_4\text{—}COOR_5 \qquad (II)$$

in which formula:

$R_4$ represents a linear or branched alkenyl radical containing from 2 to 24 carbon atoms and $R_5$ represents an alkyl radical containing from 1 to 12 carbon atoms,with the aid of a sulphurising agent in an amount corresponding to a weight of sulphur of between 0.5 and 10%, relative to the weight of the composition to be sulphurised.

2. Sulphurised metal dithiophosphates according to Claim 1, characterised in that they are obtained by sulphurising a composition containing from 100 to 50% of a metal dithiophosphate of the formula I and from 0 to 50% of an alkyl ester of the formula II.

3. Sulphurised metal dithiophosphates according to Claim 1 or Claim 2, characterised in that M is zinc.

4. Sulphurised metal dithiophosphates according to any one of Claims 1 to 3, characterised in that $R_1$ contains from 7 to 17 carbon atoms if it represents an alkenyl radical, $R_2$ and $R_3$ contain from 1 to 4 carbon atoms, $R_4$ contains from 7 to 17 carbon atoms and $R_5$ contains from 1 to 4 carbon atoms.

5. Sulphurised metal dithiophosphates according to any one of the preceding claims, characterised in that $R_1$ represents a decenyl or heptadecenyl radical or a $C_{19}H_{29}$ radical derived from abietic acid, $R_2$ and $R_3$ represent a methyl, ethyl or butyl radical, $R_4$ represents a decenyl or heptadecenyl radical and $R_5$ represents a methyl, ethyl or butyl radical.

6. Sulphurised metal dithiophosphates according to any one of Claims 1 to 5, characterised in that the sulphurisation is carried out with the aid of 1 to 5% by weight of sulphur, relative to the composition to be sulphurised.

7. Sulphurised metal dithiophosphates according to any one of Claims 1 to 5, characterised in that the sulphurisation is carried out with the aid of sulphur at a temperature above 150°C.

8. Sulphurised metal dithiophosphates according to Claim 7, characterised in that the sulphurisation is carried out at a temperature between 170 and 220°C.

9. Application of the sulphurised metal dithiophosphates forming the subject of any one of Claims 1 to 8 as additives which make it possible to improve the extreme-pressure and anti-wear properties of lubricating oils.

10. Application of the sulphurised metal dithiophosphates according to Claim 9 by using 0.3 to 15% by weight of said sulphurised metal dithiophosphates, relative to the weight of the oils.

**Revendications pour l'Etat contractant: AT**

1. Procédé de préparation de dithiophosphates métalliques sulfurisés caractérisé en ce qu'une composition contenant:

— de 100 à 20%, d'un dithiophosphate métallique de formule I:

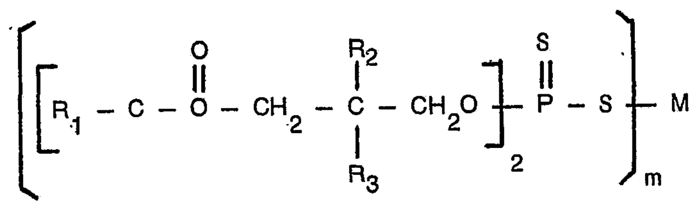

(I)

formule dans laquelle:

— $R_1$ représente:

— un radical alcényle linéaire ou ramifié contenant de 2 à 24 atomes de carbone, éventuellement substitué par au moins un groupe phényle,

— un radical cycloaliphatique ou polycycloaliphatique insaturé contenant de 3 à 20 atomes de carbone, éventuellement substitué par un ou plusieurs groupes alcoyles contenant de 1 à 12 atomes de carbone.

— $R_2$ et $R_3$ sont semblables ou différents et représentent un radical alcoyle contenant de 1 à 12 atomes de carbone;

— m représente la valence du métal M

— M représente un métal du groupe IIB, IIIB, IVB ou VIII de la classification périodique des éléments,

— et de 0 à 80% d'un ester d'alcoyle de formule II:

$$R_4—COOR_5 \qquad (II)$$

formule dans laquelle:

$R_4$ représente un radical alcényle linéaire ou ramifié contenant de 2 à 24 atomes de carbone, et $R_5$ représente un radical alcoyle contenant de 1 à 12 atomes de carbone, est sulfurisée à l'aide d'un agent de sulfurisation selon une quantité correspondant à un poids de soufre compris entre 0,5 et 10% par rapport au poids de composition à sulfuriser.

2. Procédé selon la revendication 1, caractérisé en ce que la composition à sulfuriser contient de 100 à 50% de dithiophosphate métallique de formule I et de 0 à 50% d'ester d'alcoyle de formule II.

3. Procédé selon la revendication 1 ou la revendication 2 caractérisé en ce que M est du zinc.

4. Procédé selon l'une quelconque des revendications 1 à 3 caractérisé en ce que $R_1$ contient de 7 à 17 atomes de carbone lorsqu'il représente un radical alcoyle, $R_2$ et $R_3$ contiennent de 1 à 4 atomes de carbone, $R_4$ contient de 7 à 17 atomes de carbone et $R_5$ contient de 1 à 4 atomes de carbone.

5. Procédé selon l'une quelconque des revendications précédentes caractérisé en ce que $R_1$ représente un radical décényle, heptadécényle ou un radical en $C_{19}$—$C_{29}$ dérivant de l'acide abiétique, $R_2$ et $R_3$ représentent un radical méthyle, éthyle ou butyle, $R_4$ représente un radical décényle ou heptadécényle, $R_5$ représente un radical méthyle, éthyle ou butyle.

6. Procédé selon l'une quelconque des revendications 1 à 5 caractérisé en ce que la sulfurisation est réalisée à l'aide de 1 à 5% en poids de soufre par rapport à la composition à sulfuriser.

7. Procédé selon l'une quelconque des revendications 1 à 5 caractérisé en ce que la sulfurisation est réalisée à l'aide de soufre à une température supérieure à 150°C.

8. Procédé selon la revendication 7 caractérisé en ce que la sulfurisation est réalisée à une température comprise entre 170 et 220°C.

9. Application des dithiophosphates métalliques sulfurisés obtenus, selon le procéde faisant l'objet de l'une quelconque des revendications 1 à 8 comme additifs permettant d'améliorer les propriétés extrême-pression et anti-usure des huiles lubrifiantes.

10. Application des dithiophosphates métalliques sulfurisés selon la revendication 9 par mise en oeuvre de 0,3 à 15% en poids desdits dithiophosphates métalliques sulfurisés par rapport au poids d'huile.

**Patentansprüche für den Vertragsstaat: AT**

1. Verfahren zur Herstellung von mit Schwefel behandelten Metall-dithiophosphaten, dadurch gekennzeichnet, daß ein Gemisch enthaltend:

— 100 bis 20% eines Metall-dithiophosphats der allgemeinen Formel I

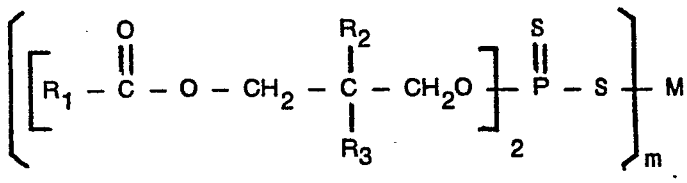

(I)

in der $R_1$

eine lineare oder verzweigte Alkenylgruppe enthaltend 2 bis 24 Kohlenstoffatome, gegebenenfalls substituiert mit mindestens einer Phenylgruppe,

eine ungesättigte cycloaliphatische oder polycycloaliphatische Gruppe enthaltend 3 bis 20 Kohlenstoffatome, gegebenenfalls substituiert mit ein oder mehreren Alkylgruppen, die 1 bis 12 Kohlenstoffatome enthalten, bedeutet

$R_2$ und $R_3$ gleich oder verschieden sind und für eine Alkylgruppe mit 1 bis 12 Kohlenstoffatomen stehen,

m die Wertigkeit des Metalls bedeutet,

M ein Metall aus der Gruppe IIB, IIIB, IVB oder VIII des Periodensystems der Elemente bedeutet;

— sowie 0 bis 80% eines Alkylesters der allgemeinen Formel II

$$R_4\text{—COO } R_5 \qquad (II)$$

in der

$R_4$ eine lineare oder verzweigte Alkenylgruppe mit 2 bis 24 Kohlenstoffatomen bedeutet und $R_5$ für eine Alkylgruppe mit 1 bis 12 Kohlenstoffatomen steht, behandelt wird mit einem Mittel zur Schwefelbehandlung in einer Menge entsprechend einem Schwefelgewicht von 0,5 bis 10%, bezogen auf das Gewicht des Gemisches das mit Schwefel behandelt werden soll.

2. Verfahren nach Anspruch 1, dadurch gekennzeichnet, daß das Gemisch, das mit Schwefel behandelt werden soll, 100 bis 50% Metall-dithiophosphat der Formel I sowie 0 bis 50% Alkylester der Formel II enthält.

3. Verfahren nach Anspruch 1 oder Anspruch 2, dadurch gekennzeichnet, daß M Zink bedeutet.

4. Verfahren nach einem der Ansprüche 1 bis 3, dadurch gekennzeichnet, daß $R_1$ 7 bis 17 Kohlenstoffatome enthält, wenn es für eine Alkenylgruppe steht, $R_2$ und $R_3$ 1 bis 4 Kohlenstoffatome enthalten, $R_4$ 7 bis 17 Kohlenstoffatome enthält und $R_5$ 1 bis 4 Kohlenstoffatome enthält.

5. Verfahren nach einem der vorangegangenen Ansprüche, dadurch gekennzeichnet, daß $R_1$ eine Decenylgruppe, Heptadecenylgruppe oder eine von Abietinsäure abgeleitete $C_{19}H_{29}$-Gruppe ist, $R_2$ und $R_3$ für eine Methylgruppe. Äthylgruppe oder Butylgruppe stehen, $R_4$ eine Decenylgruppe oder Heptadecenylgruppe bedeutet und $R_5$ für eine Methylgruppe, Äthylgruppe oder Butylgruppe steht.

6. Verfahren nach einem der Ansprüche 1 bis 5, dadurch gekennzeichnet, daß die Schwefelbehandlung mit Hilfe von 1 bis 5 Gew.-% Schwefel, bezogen auf das Gemisch, welches mit Schwefel behandelt werden soll, vorgenommen wird.

7. Verfahren nach einem der Ansprüche 1 bis 5, dadurch gekennzeichnet, daß die Schwefelbehandlung mit Hilfe von Schwefel bei einer Temperatur oberhalb 150°C vorgenommen wird.

8. Verfahren nach Anspruch 7, dadurch gekennzeichnet, daß die Schwefelbehandlung bei einer Temperatur zwischen 170 und 220°C vorgenommen wird.

9. Verwendund der nach einem der Ansprüche 1 bis 8 erhaltenen, mit Schwefel behandelten Metall-dithiophosphate als Zusätze zur Verbesserung der Hockdruck- und Anti-verschleißeigenschaften von Schmierölen.

10. Verwendung der mit Schwefel behandelten Metall-dithiophosphate nach Anspruch 9 durch Einsatz von 0,3 bis 15 Gew.-% dieser mit Schwefel behandelten Metall-dithiophosphate, bezogen auf das Gewicht des Schmieröls.

**Claims for the Contracting State: AT**

1. Process for the preparation of sulphurised metal dithiophosphates, characterised in that a composition containing:

from 100 to 20% of a metal dithiophosphate of the formula I:

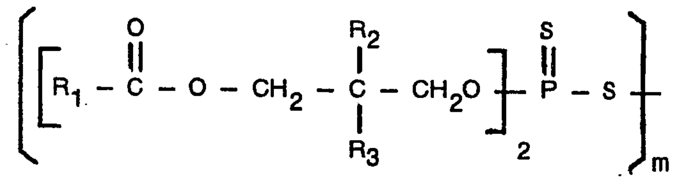

(I)

in which formula:

$R_1$ represents a linear or branched alkenyl radical containing from 2 to 24 carbon atoms, which is optionally substituted by at least one phenyl group, or an unsaturated cycloaliphatic or polycycloaliphatic radical containing from 3 to 20 carbon atoms, which is optionally substituted by one or more alkyl groups containing from 1 to 12 carbon atoms,

$R_2$ and $R_3$ are similar or different and represent an alkyl radical containing from 1 to 12 carbon atoms,

m represents the valency of the metal M, and

M represents a metal from group IIB, IIIB, IVB or VIII of the periodic classification of the elements, and from 0 to 80% of an alkyl ester of the formula II:

$$R_4\text{—}COOR_5 \qquad \text{(II)}$$

in which formula:

$R_4$ represents a linear or branched alkenyl radical containing from 2 to 24 carbon atoms and $R_5$ represents an alkyl radical containing from 1 to 12 carbon atoms, is sulphurised with the aid of a sulphurising agent in an amount corresponding to a weight of sulphur of between 0.5 and 10%, relative to the weight of the composition to be sulphurised.

2. Process according to Claim 1, characterised in that the composition to be sulphurised contains from 100 to 50% of a metal dithiophosphate of the formula I and from 0 to 50% of an alkyl ester of the formula II.

3. Process according to Claim 1 or Claim 2, characterised in that M is zinc.

4. Process according to any one of Claims 1 to 3, characterised in that $R_1$ contains from 7 to 17 carbon atoms if it represents an alkenyl radical, $R_2$ and $R_3$ contain from 1 to 4 carbon atoms, $R_4$ contains from 7 to 17 carbon atoms and $R_5$ contains from 1 to 4 carbon atoms.

5. Process according to any one of the preceding claims, characterised in that $R_1$ represents a decenyl or heptadecenyl radical or a $C_{19}H_{29}$ radical derived from abietic acid, $R_2$ and $R_3$ represents a methyl, ethyl or butyl radical, $R_4$ represents a decenyl or heptadecenyl radical and $R_5$ represents a methyl, ethyl or butyl radical.

6. Process according to any one of Claims 1 to 5, characterised in that the sulphurisation is carried out with the aid of 1 to 5% by weight of sulphur, relative to the composition to be sulphurised.

7. Process according to any one of Claims 1 to 5, characterised in that the sulphurisation is carried out with the aid of sulphur at a temperature above 150°C.

8. Process according to Claim 7, characterised in that the sulphurisation is carried out at a temperature between 170 and 220°C.

9. Application of the sulphurised metal dithiophosphates obtained in accordance with the process forming the subject of any one of Claims 1 to 8, as additives which make it possible to improve the extreme-pressure and anti-wear properties of lubricating oils.

10. Application of the sulphurised metal dithiophosphates according to Claim 9, by using 0.3 to 15% by weight of the said sulphurised metal dithiophosphates, relative to the weight of oil.